# EUROPEAN PATENT APPLICATION

(11) **EP 1 520 473 A2**
(43) Date of publication of application: **06.04.2005**
(21) Application number: 04077751.8
(22) Date of filing: 04.10.2004
(51) Int. Cl.: A21B 1/42, A21B 1/26

(54) **Baking oven**

(30) Priority: 03.10.2003 NL 1024449
(71) Applicant: Conway Exploitatie en Beheer B.V., 3972 NE Driebergen-Rijsenburg (NL)
(72) Inventor: de Hoogh, Ernest, 3411 AB Lopik (NL); van der Hijden, Augustinus Cornelis Antonius, 3522 JP Utrecht (NL); van Capelleveen, Pieter, 3921 CM Elst (NL)
(74) Representative: Winckels, Johannes Hubertus F.

(57) **Abstract**

A baking oven provided with an oven chamber which is arranged for receiving a large number of carriers in carrier positions, wherein a transport system is provided which is arranged for stepwise transporting carriers through the oven chamber from a preceding carrier position to a next carrier position, wherein the transport system comprises an ascending path and a descending path, wherein heating means are present for heating air, wherein blow openings are provided via which, in use, heated air is introduced into the oven chamber, as well as suction openings via which cooled air is extracted from the oven chamber. The invention further provides a system provided with such a baking oven in which carriers of different types can be processed.

## Description

The invention relates to a baking oven provided with an oven chamber which is arranged for receiving a large number of carriers in carrier positions, wherein a transport system is provided which is arranged for stepwise transporting carriers through the oven chamber from a preceding carrier position to a next carrier position, wherein the transport system comprises an ascending path and a descending path, wherein heating means are present for heating air, wherein blow openings are provided via which, in use, heated air is introduced into the oven chamber, as well as suction openings via which cooled air is extracted from the oven chamber.

Such a baking oven is known from the European patent EP-B-0 710 441. In the known apparatus, hot air is blown into the oven chamber via vertical slots extending throughout the height of the oven. Fans draw in the cooled air via a central suction opening extending in vertical direction and pass it via heating means to the vertically extending blowing slots again. Accordingly, in the known oven, there is a rather overall air circulation in the oven chamber. Moreover, the flow direction of the hot air over carriers situated in the ascending path is the same in each case. One of the consequences is that the baking products disposed on the carriers are circumfused by the hot air from the same side in each case, which leads to a non-uniform heating of the baking products. In the descending path too, the hot air comes from the same direction in each case. Another drawback is that there is not any possibility of controlling the amount of hot air that is passed over the carriers other than through a control directly influencing the entire oven chamber.

The invention contemplates a baking oven by means of which a better heating of baking products is realized, in the sense that the flow patterns of the hot air over the baking products are better manageable.

To that end, the invention provides a baking oven of the type described in the preamble, wherein adjacent each carrier position at least one blow opening and at least one suction opening are arranged, the blow and suction openings being arranged movably at least in vertical direction relative to the carrier positions.

As adjacent each carrier position at least one blow opening and at least one suction opening are arranged, the hot air flow at that respective carrier position is accurately defined by the positioning of the blow and suction opening relative to the carrier. This is an essential difference with respect to the oven from the European publication mentioned. For in that known oven, an overall air flow prevails in the oven chamber and it is not possible to influence the direction of the air flow and the position of the air flow relative to a carrier disposed in a carrier position. As, according to the invention, the blow and suction openings are arranged movably relative to the carrier positions, the position of the hot air flow relative to the carriers can be varied. Thus, for instance, in the case of high baking products, the blow and suction openings can be moved slightly upwards in vertical direction relative to the carriers, so that the air flow impinges upon the baking products somewhat more from above than from the side. This makes it possible to influence the degree of browning of the baking products as well as the place where most browning occurs. Controllability of the position of the hot air flow can also be of great relevance to the cooking of the products.

According to a further elaboration of the invention, for a particular carrier position the blow openings are arranged adjacent a first side of a carrier disposed in the respective carrier position, while the suction openings are arranged adjacent a second side of the respective carrier, located opposite the first side.

As a result, a hot air flow extending across the carrier is created, which preferably covers the entire surface of the carrier.

According to a further elaboration of the invention, it is particularly favorable when adjacent the first sides of successive carriers viewed in vertical direction, alternately suction and blow openings are arranged, such that in two carrier positions located directly above each other hot air has opposite flow directions. Such an embodiment has the advantage that the baking products when traversing the different carrier positions are circumfused by hot air alternately from the left and from the right. Such an alternate circumfusion with hot air results in a more uniform heating and cooking of the baking product.

The invention further relates to a baking oven provided with an oven chamber which is arranged for receiving a large number of carriers in carrier positions, wherein a transport system is provided which is arranged for stepwise transporting carriers through the oven chamber from a preceding carrier position to a next carrier position, wherein the transport system comprises an ascending path and a descending path, wherein heating means are present for heating air, wherein blow openings are provided via which, in use, heated air is introduced into the oven chamber, as well as suction openings via which cooled air is extracted from the oven chamber, characterized in that carriers of different types are introducible into the oven.

Further, the invention relates to a baking oven provided with a heat exchanger provided with primary and secondary channels, wherein the primary channels are connected to at least one burner, wherein an outlet of the primary channels is connectible to a flue, wherein an inlet of the secondary channels is in fluid communication, via a pipe system, with the suction openings, wherein an outlet of the secondary channels is in fluid communication, via a pipe system, with the blow openings. At one of these ovens, further, there may be means for placing baking products onto the carriers adjacent an oven chamber inlet and means for taking off baking products from the carriers adjacent an oven chamber outlet, wherein the transport system is provided with return transport means to transport the carrier from the lowermost carrier position of the descending path to the lowermost position of the ascending path.

According to a further elaboration of the invention, these return transport means can extend in the oven chamber. It is also possible, however, that the return transport means extend outside the oven chamber.

With each of the baking ovens described, carriers of different types can be introduced into the oven.

In this connection, a first type of carriers may be manufactured from substantially metal, and a second type of carriers may be manufactured from substantially ceramic material.

Optionally, a carrier transport system with a buffer capacity, extending outside the oven, may be provided for removing and/or temporarily storing the carriers of a particular type.

It may be noted that US 6,450,086 shows a baking oven which, however, does not involve any loose carriers in the form of metal plates or ceramic plates that can be introduced into and removed from the oven. With the known oven, the carriers are fixedly connected with a chain which always travels the same path through a number of processing stations. The known oven does not involve any flexibility resulting from the fact that loose carriers are being employed. Indeed, it is an apparatus for a different type of bakery, viz. an industrial bakery where only a few types of product are manufactured in very large numbers. The oven according to the invention is intended for bakeries that must be able to produce many different products in considerable numbers. Accordingly, the known apparatus does not involve any external transport system for the supply and removal of carriers. The vertical position of the blow and suction openings is fixed in the known apparatus, only the blow-out direction can be varied in the known apparatus. The advantages that can be achieved with the blow and suction openings movable at least in vertical direction cannot be realized with the known apparatus.

WO94/16567 shows a baking oven into which a carriage with baking plates can be wheeled. This known oven does not involve any transport system with an ascending and a descending path, let alone a transport system in which carriers can be placed and from which carriers can be removed. For this known apparatus, too, it holds that while the blow-out direction of the blow openings can be varied, the positions of the blow and suction openings are not adjustable in vertical direction. The known apparatus moreover does not feature a heat exchanger by means of which clean air is heated by means of flue gases of a burner. None of the publications mentioned discloses a baking oven which is suitable for receiving therein carriers of different types, such as, for instance, metal carriers and ceramic carriers.

The invention further provides a baking system provided with a baking oven according to the invention, an external transport system for carriers, with carriers of at least two types being included in the transport system.

According to a further elaboration of the baking system, in the external transport system thereof, buffers are included for at least temporarily storing carriers.

Further elaborations of the invention are described in the subclaims and will hereinafter be further clarified with reference to the drawings.
Fig. 1 shows a front view of an exemplary embodiment of the baking oven;
Fig. 2 shows a right-hand side view;
Fig. 3 shows a rear view;
Fig. 4 shows a front view of the baking oven, with the front plating removed;
Fig. 5 shows a top plan view of the baking oven, with the top plating removed;
Fig. 6 shows a cross section along line VI-VI from Fig. 5;
Fig. 7 shows a partly cutaway front view of a second exemplary embodiment of a baking oven according to the invention;
Fig. 8 shows a top plan view of the exemplary embodiment represented in Fig. 7;
Fig. 9 shows a cross sectional view of the blow and suction openings, being provided with shutters;
Fig. 10 shows the adjusting possibilities of the upper shutters;
Fig. 11 shows the adjusting possibilities of the lower shutters; and
Fig. 12 shows view P from Fig. 9.

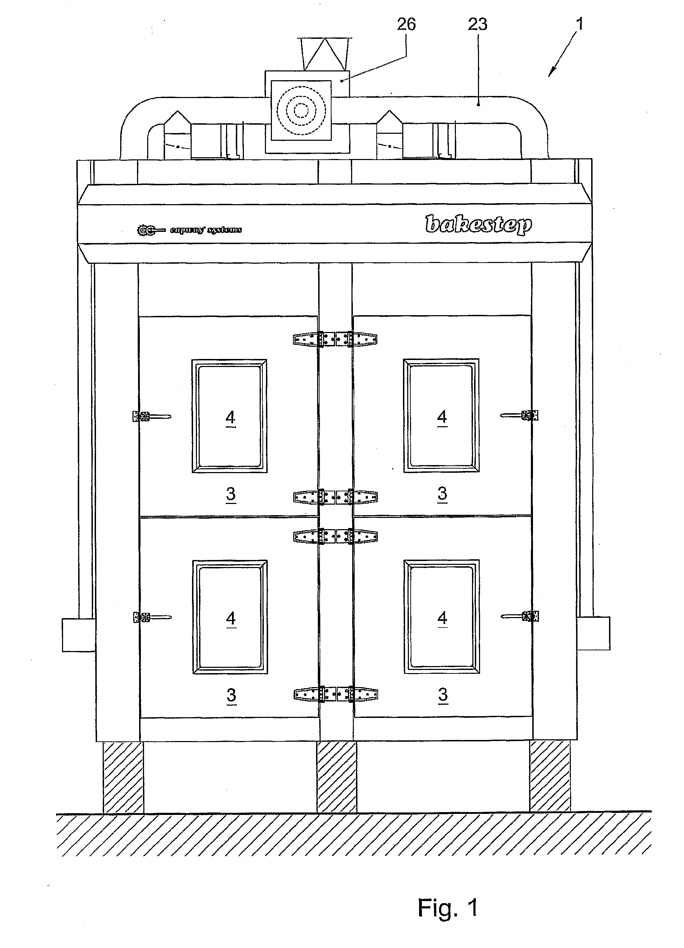

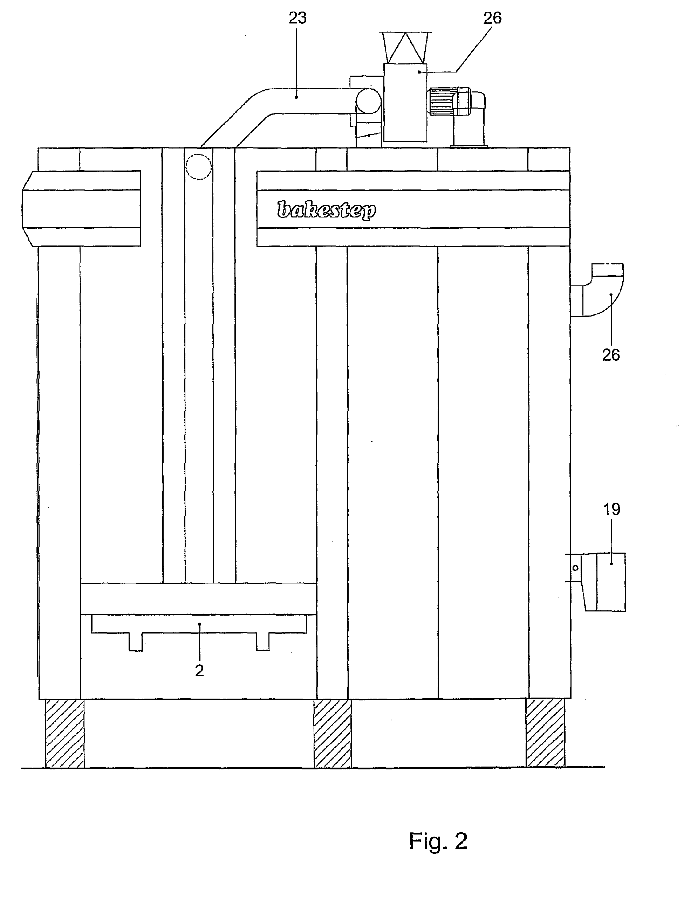

The exemplary embodiment shown concerns a vertical baking oven 1 which is provided with an input opening 2 (see Fig. 2) for the input of a carrier with baking products present thereon. Optionally, via the opening, also loose baking products can be supplied, which, in the oven, are placed on a carrier. The front view represented in Fig. 1 shows four oven doors 3, provided with windows 4 for inspecting the oven chamber 5. The oven doors can be opened to carry out maintenance work on a transport system disposed in the oven chamber 5. The transport system transports a large number of carriers intermittently from carrier position to carrier position. In the oven chamber, a large number of carrier positions are present, so that a large number of carriers and hence baking products can be subjected to the baking process simultaneously. The height of the exemplary embodiment represented in Fig. 1 is, for instance, 5 meters.

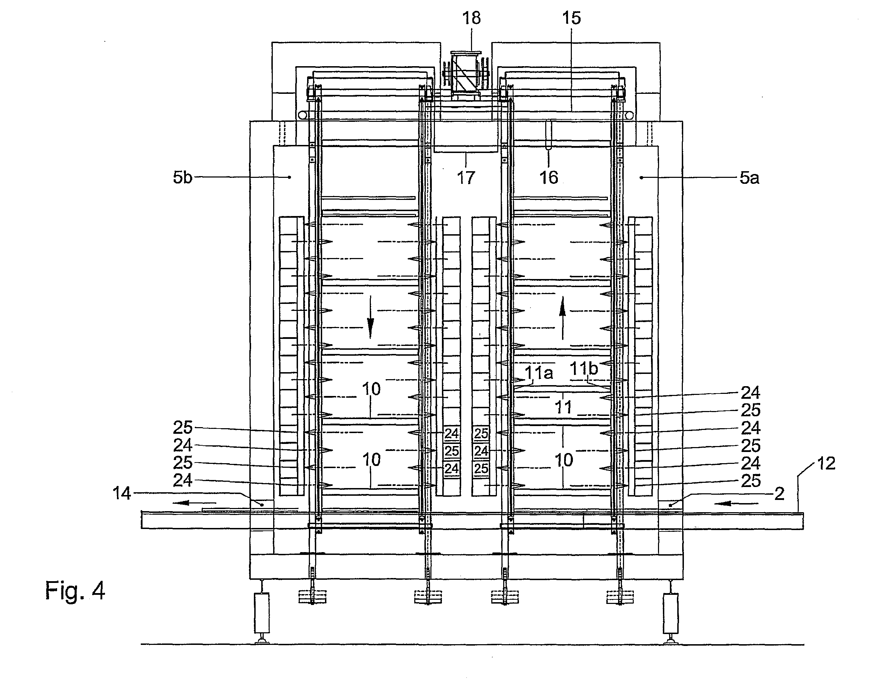

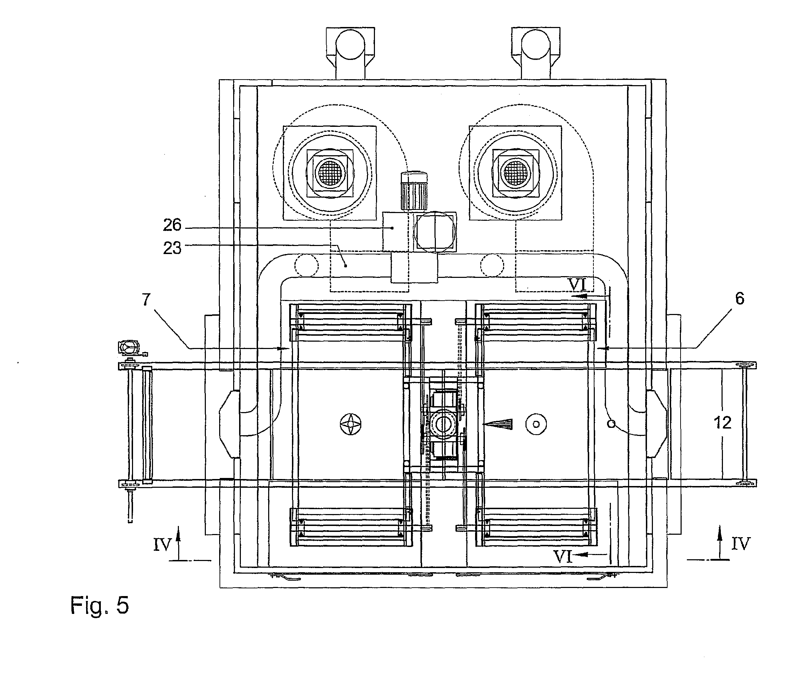

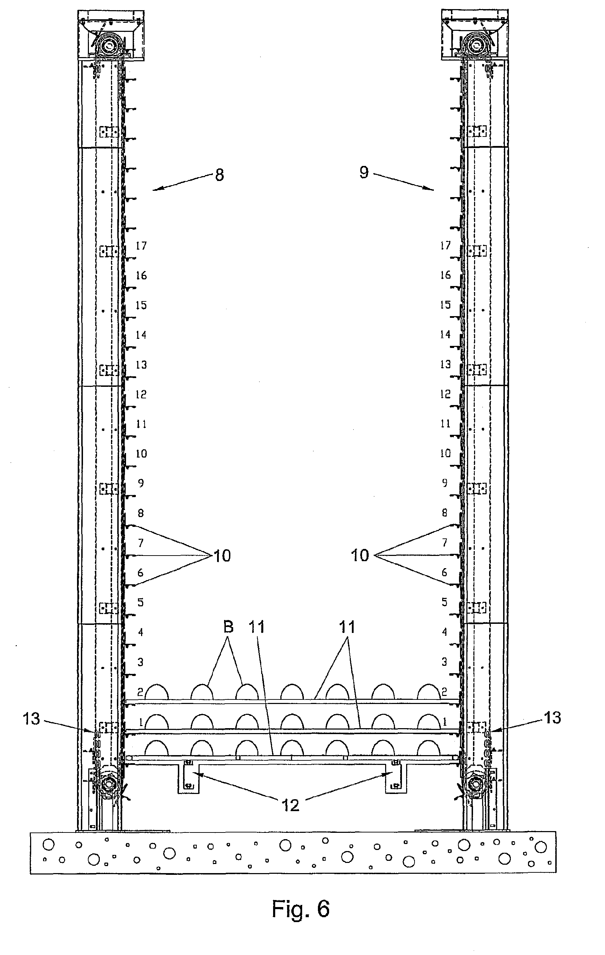

The transport system comprises two main components, viz. an ascending path 6 and a descending path 7 (see Figs. 4 and 5). The ascending path is disposed in oven chamber part 5a and the descending path in oven chamber part 5b. Fig. 6 shows in more detail the ascending path 6 of the transport system. The constructional make-up of the descending path 7 is equal to that of the ascending path 6. The ascending path 6 as represented in Fig. 6 comprises two chain conveyors 8, 9 extending in vertical direction, on which the carrying guides 10 are mounted. The carriers 11 are moved by a feed conveyor 12 onto the carrying guides 10 disposed in the lowermost carrier position. Next, the chain conveyors 8, 9 move all carriers 11 disposed therein to the next, higher carrier position, so that at the bottom in turn a next carrier 11 can be fed into the lowermost carrier position. In order to facilitate access to the oven chamber 5 via the oven doors 3, it is preferred to mount the carrying guides 10 in a simply detachable manner on the conveyor chains 13 of the chain conveyors. After opening a door 3, a number of carrying guides 10 can then be simply removed, thereby affording free access to the oven chamber 5. As is clearly visible in Fig. 4, the feed conveyor 12 extends all the way to the output opening 14, such that a carrier 11, if desired, can be transported from the input opening 2 direct to the output opening 14. Adjacent the top of the ascending and the descending paths 6, 7, a transfer provision 15-17 is provided, by means of which a carrier 11 which is disposed in the uppermost carrier position of the ascending path 6 is movable to the uppermost carrier position of the descending path 7. The transfer provision comprises a chain 15 extending in horizontal direction, provided with at least one optionally retractable and extendible push finger 16. Between the two uppermost carrier positions mentioned, guides 17 are provided, over which a carrier 11 is slidable by means of the push finger 16. The chain conveyors 8, 9 for both the ascending and the descending path 6 and 7, respectively, are driven by a single driving motor 18 via chain transmissions.

Optionally, the baking oven may be provided with a second output opening adjacent the uppermost carrier position of the ascending or descending path 6, 7. Via that second output opening, carriers or baking products which have only traversed the ascending path can be removed from the oven chamber 5. In that connection, for instance the transfer provision 15-17 can be used. For some baking products, traversing only the ascending path is sufficient for them to be cooked and ready. It will be clear that, as a result, the residence time in the oven chamber is shortened by half of the time. When in the oven chamber more than one ascending and more than one descending path are situated, it can be decided, as desired, whether the carriers traverse one or more ascending or descending paths by removing them at a desired time via the first output opening or the second output opening. Accordingly, in this way, a particularly great flexibility as regards baking time has been obtained. It is also possible for a particular series of carriers to traverse a particular number of ascending and descending paths in which specific baking conditions prevail. Thus, for instance, it may be elected to have a carrier traverse the first ascending, the third descending and the fifth ascending path, after which the carrier is removed from the oven via a second, upper output opening.

It is possible to introduce the carriers 11 into the oven chamber 5 via the input opening 2 and to remove them from the oven chamber 5 via the output opening 14. An inherent consequence of this is that carriers of different types can be introduced into the oven. Thus, for instance, carriers of metal or carriers of substantially ceramic material, such as for instance stone, can be introduced.

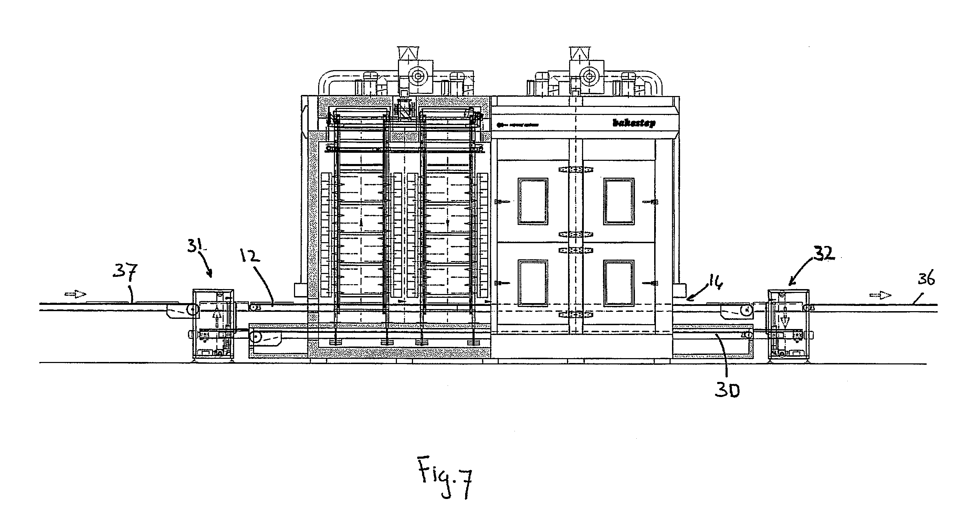

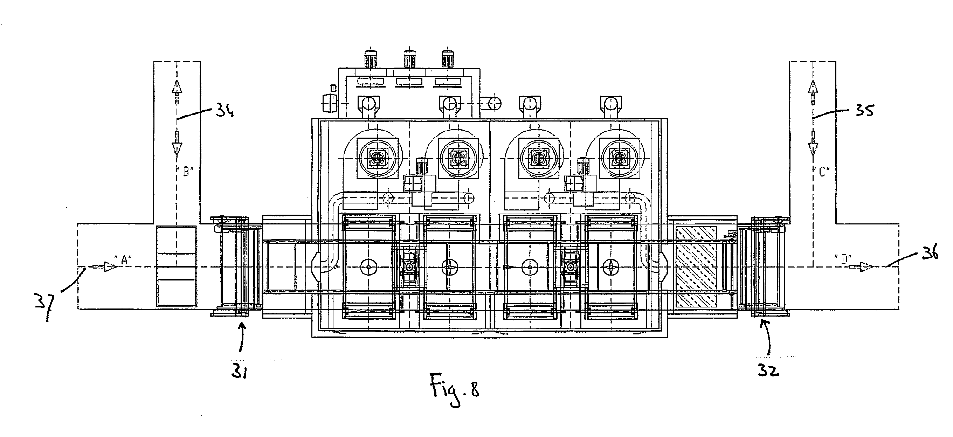

However, according to an alternative embodiment, which is represented in Figs. 7 and 8, it is also possible for the baking oven to be provided with means for placing baking products on the carriers 11 adjacent the oven chamber inlet 2 and with means for removing baking products from the carriers 11 adjacent the oven chamber outlet 14. The carriers 11 then remain in the oven chamber 5 or can be transported out of the oven for just a short time and, after the baking products have been placed or removed, respectively, be introduced into the oven chamber again directly. Supplemental to feed conveyor 12 as represented in Fig. 4, return transport means 30, 31, 32 are present to transport the carriers from the lowermost carrier position of the descending path adjacent the output opening 14 to the lowermost position of the ascending path adjacent the input opening 2. The exemplary embodiment of Figs. 7 and 8 shows a return conveyor 30, a first lift 31 by means of which carriers can be brought from the return conveyor 30 to the feed conveyor 12, and a second lift 32 by means of which carriers can be taken off a discharge side of the feed conveyor 12 adjacent the oven chamber outlet 14 and can be transferred to return conveyor 30. The return conveyor 30 extends in the oven chamber 5. The return conveyor can be designed in the same manner as the above-described transfer provision 15-17. In the exemplary embodiment of Figs. 7 and 8, however, the return conveyor 30 is designed as a chain conveyor. Optionally, in the oven chamber 5, additional heating means may be arranged for heating the at least one carrier 11 situated in the return transport path 30. The carrier 11 can for instance be designed as a ceramic baking plate or the like. An embodiment in which the carriers are not, or just very briefly, removed from the oven chamber 5 has the advantage that less energy is lost heating the carriers, since the carriers 11 preserve substantially the oven temperature and do not cool down to the temperature of the external environment. The means for placing and removing baking products onto and from the carriers can be designed as known horizontally movable belt conveyors, nibbling belts, upwardly and downwardly and horizontally movable suction devices by means of which baking products can be lifted. In the exemplary embodiment shown, the dough pieces or carriers are taken off a dough piece feed conveyor 37. It is noted that the dough piece feed conveyor 37 and the discharge conveyor 36 can also be used for feeding and discharging carriers which may or may not be loaded with dough pieces or baking products. The top plan view of Fig. 8 shows a somewhat more expanded external transport system 34, 35 for removing and temporarily storing carriers. Such an external transport system is provided with conveyors 34, 35 and optionally a buffer for storing carriers of a particular type. Thus, at one time the baking oven can be loaded with baking products disposed on metal carriers, while at another time the baking oven can be loaded with baking products disposed on ceramic carriers. The bakery thus obtains a greater flexibility and the baking oven is deployable for a wider assortment of products. It will be clear that the external transport system can be expanded much further for the purpose of a completely automated baking system. Such a baking system is provided with a baking oven according to the invention, an external transport system for carriers, and preferably processes carriers of at least two types in that these are included in the transport system. To that end, in the external transport system of the baking system, buffers may be included for at least temporarily storing carriers.

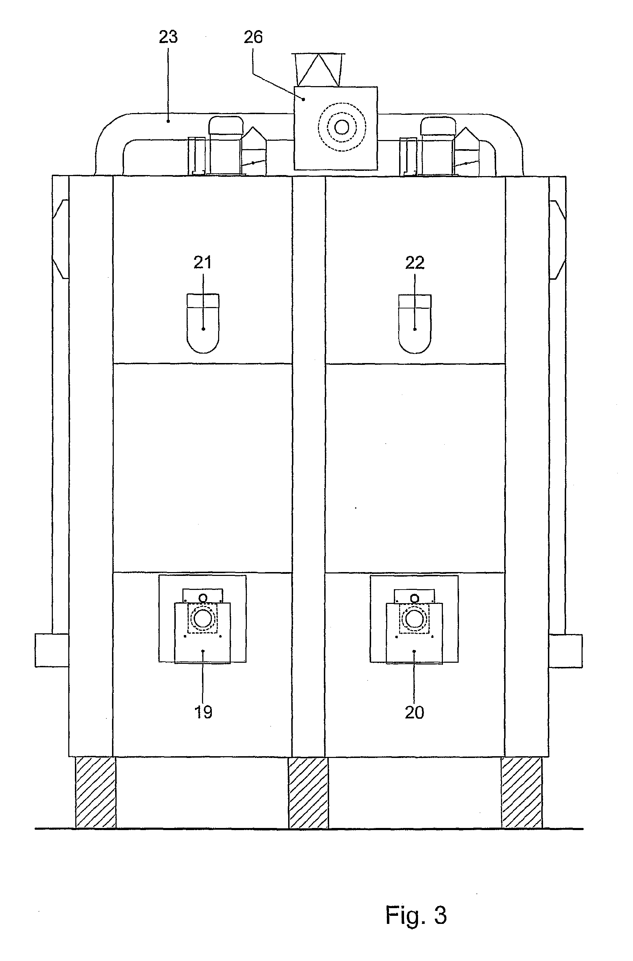

The baking oven must evidently be provided with heating means for heating air. In the present exemplary embodiment, the heating means are formed by two burners 19, 20 which are visible in Figs. 2 and 3 and which can effect different temperatures in the ascending and the descending path. The burners 19, 20 are connected to the primary channels of a heat exchanger. An outlet of the primary channels is connectible to a flue 21, 22. An inlet of the secondary channels of the heat exchanger is in fluid communication with suction openings 25 for extracting cool air from the oven chamber 5. The outlet of the secondary channels of the heat exchanger is in fluid communication with blow openings 24 for introducing hot air into the oven chamber 5. Further, the pipe system 23 of which the secondary channels are a part is provided with a compressor 26 for blowing hot air into the oven chamber 5 at a certain rate. The compressor preferably has a variable speed, so that the flow rate of the hot air in the oven chamber is controllable. Optionally, for each path a compressor may be provided, for controlling the flow rate of each path independently of each other. It is even possible to provide the pipe system within a single path, for instance within the ascending path, with two compressors, so that two heating zones are created within the respective path. Thus, a different rate and/or temperature can be imposed on the hot air in a lower zone than in the upper zone of the ascending path. Instead of two compressors, it is also possible to use one or more control valves for creating different temperatures and flow rates in the various zones.

The pipe system 23 is further provided with a suction opening for fresh air and with an exhaust opening for exhausting warm air coming from the oven. As a consequence, the oven can be rapidly cooled by removing the warm air from the oven and replacing this air with fresh ambient air. It is also possible during the baking process to recycle a part of the air and to exhaust another part and to replace it with fresh air. Should the oven become too hot during the baking process, the temperature can be rapidly lowered by supplying fresh ambient air to the oven chamber 5.

Of importance is that adjacent each carrier position at least one blow opening and at least one suction opening are arranged, which is visible in Fig. 4 in which the blow openings are indicated with reference numeral 24 and suction openings are indicated with reference numerals 25. According to the invention, the blow and suction openings 24, 25 are arranged so as to be movable in at least vertical direction relative to the carrier position. In that connection, the movement of all blow and suction openings 24, 25 may be coupled to each other per path 6, 7. It is also possible, however, as already indicated above, that a path 6 features more than one heating zone. It may then be important that the movement of the blow and suction openings 24, 25 can be controlled independently per zone. The invention also encompasses the variant whereby the positions of the blow and suction openings 24, 25 are controllable per carrier position.

Fig. 4 clearly shows that for a particular carrier position the blow openings 24 are arranged adjacent a first side 11a of a carrier 11 disposed in the respective carrier position, and that the suction openings 25 are arranged adjacent a second side 11b of the respective carrier 11, located opposite the first side 11a. It is also apparent from Fig. 4 that adjacent the first side 11a of successive carriers 11 viewed in vertical direction, alternately suction and blow openings 24, 25 are arranged. What is thereby accomplished is that in two carrier positions located directly above each other, hot air has opposite flow directions, which is indicated with the arrows. What is accomplished by this configuration is that the flow of the hot air over the baking products B can be very accurately positioned with respect to these baking products. In other words, the top heat and bottom heat can thus be controlled. As a result, an optimum browning result and an optimum cooking can be obtained, which is of great importance for the quality of the baking products produced by the oven. Although not represented in the drawings, the baking oven may be further provided with a steam generator which is arranged for introducing steam into the oven chamber. Steam is of importance to obtain an optimum baking result.

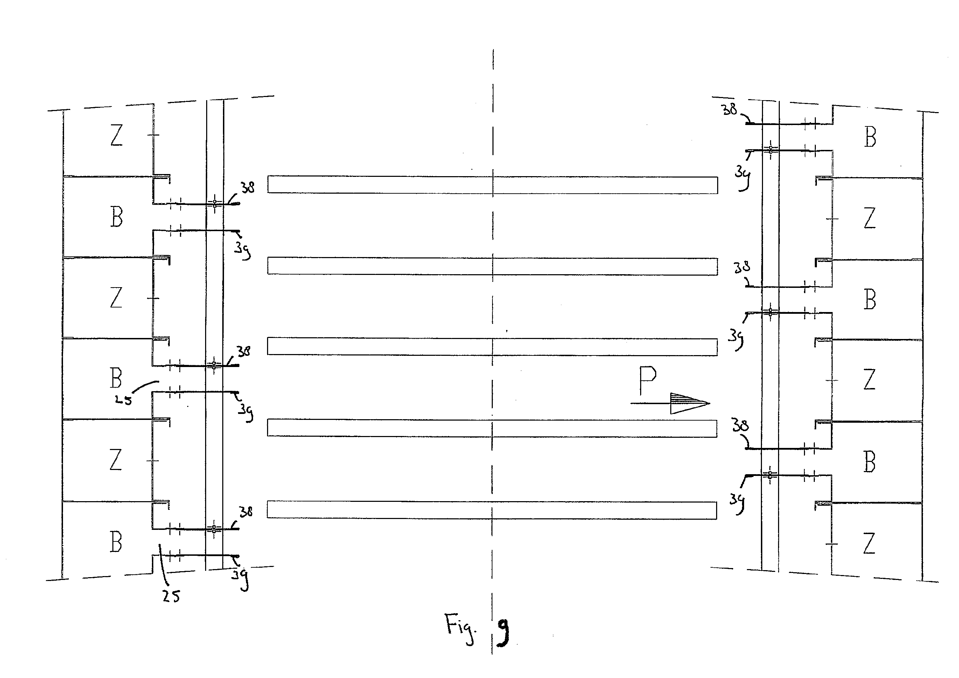

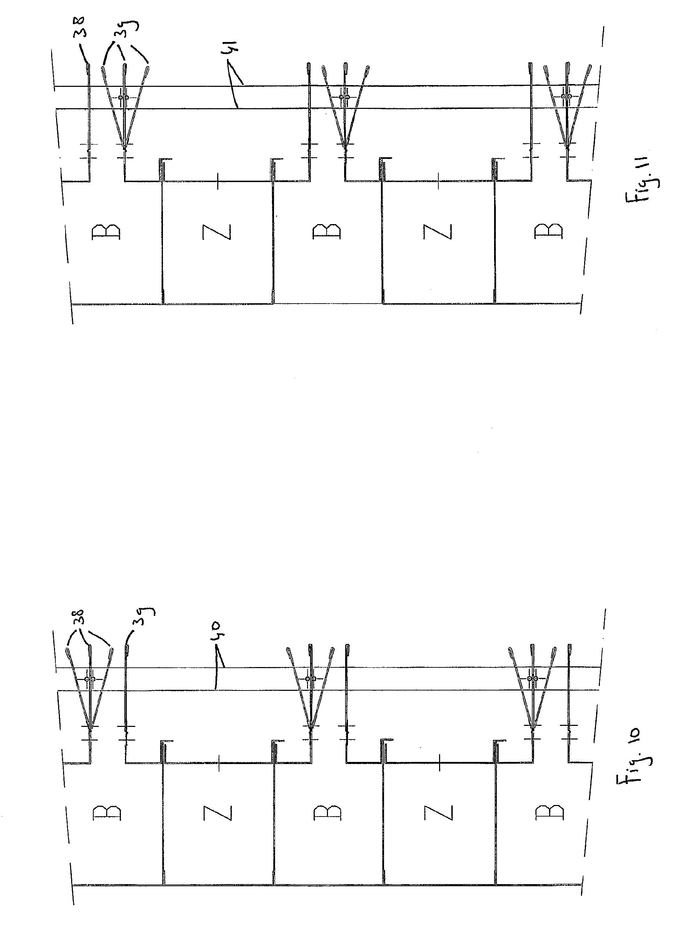

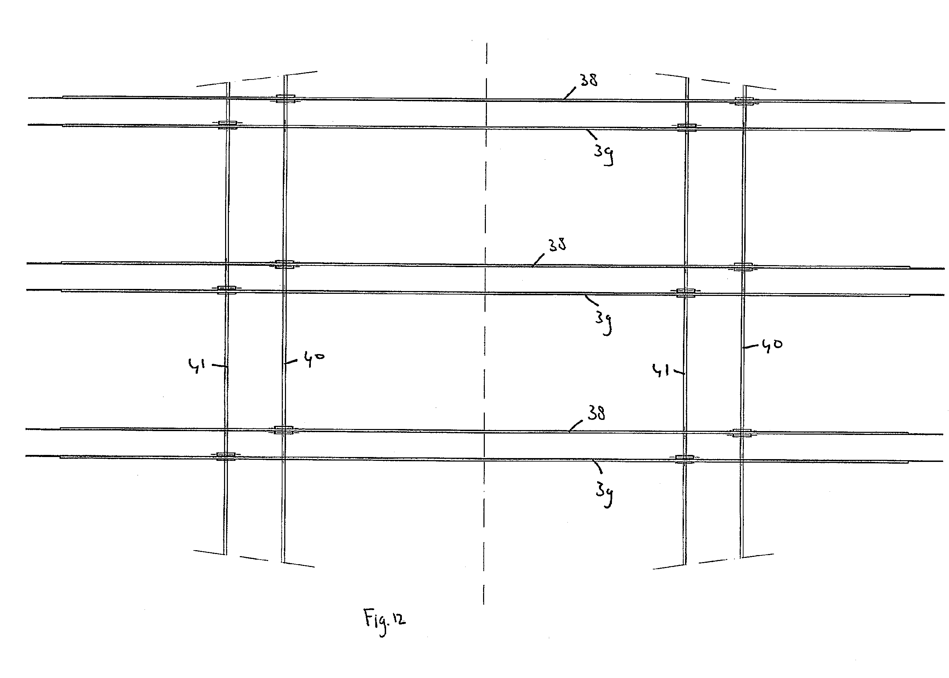

Fig. 9 shows a number of blow and suction openings 24, 25, with the openings being further provided with slats 38, 39. The angular position of the slats 38 above the various openings 24, 25 is adjustable. Also adjustable is the angular position of the slats 39 under the various openings 24, 25. To that end, control rods 40, 41 are provided. The control rods 40 adjust the upper slats 38. The control rods 41 adjust the lower slats 39. Fig. 10 shows the adjusting possibilities of the upper slats 38. Fig. 11 shows the adjusting possibilities of the lower slats 39. Fig. 12 shows the view according to arrow P from Fig. 9. Clearly visible are the control rods 40 and 41 which engage the upper and lower slats 38 and 39, respectively. By giving the slats 38, 39 different angular positions, also the size of the openings 24, 25 can be controlled. When the openings 24, 25 are moved in vertical direction, the slats 38, 39 follow this movement without changing their angular position in that the slats are connected with the same frame that carries the openings 24, 25.

Preferably, the baking oven is provided with a control which, depending on a bread type and/or bread dimensions introduced into the oven, sets the position of the blow and suction openings relative to the carrier positions.

It is clear that the invention is not limited to the exemplary embodiments described but that various modifications are possible within the scope of the invention as defined by the claims. Thus, also a directly fired oven, that is, an oven where the heated air is formed by the flue gases coming from a burner, falls within the concept of the invention.

## Claims

1. A baking oven provided with an oven chamber which is arranged for receiving a large number of carriers in carrier positions, wherein a transport system is provided which is arranged for stepwise transporting carriers through the oven chamber from a preceding carrier position to a next carrier position, wherein the transport system comprises an ascending path and a descending path, wherein heating means are present for heating air, wherein blow openings are provided via which, in use, heated air is introduced into the oven chamber, as well as suction openings via which cooled air is extracted from the oven chamber, **characterized in that** adjacent each carrier position at least one blow opening and at least one suction opening are arranged, the blow and suction openings being arranged movably at least in vertical direction relative to the carrier positions.

2. A baking oven according to claim 1, wherein for a particular carrier position, blow openings are arranged adjacent a first side of a carrier disposed in the respective carrier position, while suction openings are arranged adjacent a second side of the respective carrier, located opposite the first side.

3. A baking oven according to claim 2, wherein adjacent the first sides of successive carriers viewed in vertical direction, alternately suction and blow openings are arranged, such that in two carrier positions located directly above each other hot air has opposite flow directions.

4. A baking oven provided with an oven chamber which is arranged for receiving a large number of carriers in carrier positions, wherein a transport system is provided which is arranged for stepwise transporting carriers through the oven chamber from a preceding carrier position to a next carrier position, wherein the transport system comprises an ascending path and a descending path, wherein heating means are present for heating air, wherein blow openings are provided via which, in use, heated air is introduced into the oven chamber, as well as suction openings via which cooled air is extracted from the oven chamber, **characterized in that** carriers of different types are introducible into the oven.

5. A baking oven according to claim 4, wherein a first type of carriers is manufactured from substantially metal, while a second type of carriers is manufactured from substantially ceramic material.

6. A baking oven according to claim 4 or 5, wherein outside the oven at least one transport system with a buffer capacity is provided for removing and/or temporarily storing the carriers of a particular type.

7. A baking oven provided with a heat exchanger provided with primary and secondary channels, wherein the primary channels are connected to at least one burner, wherein an outlet of the primary channels is connectible to a flue, wherein an inlet of the secondary channels is in fluid communication, via a pipe system, with the suction openings, wherein an outlet of the secondary channels is in fluid communication, via a pipe system, with the blow openings, wherein the oven is provided with means for placing baking products onto the carriers adjacent an oven chamber inlet and with means for taking off baking products from the carriers adjacent an oven chamber outlet, wherein the transport system is provided with return transport means to transport the carrier from the lowermost carrier position of the descending path to the lowermost position of the ascending path.

8. A baking oven according to claim 7, wherein said return transport means extend in the oven chamber.

9. A baking oven according to claim 7 or 8, wherein carriers of different types are introducible into the oven.

10. A baking oven according to claim 9, wherein a first type of carriers is manufactured from substantially metal, while a second type of carriers is manufactured from substantially ceramic material.

11. A baking oven according to claim 9 or 10, wherein outside the oven a transport system with a buffer capacity is provided for storing the carriers of a particular type.

12. A baking oven according to any one of the preceding claims, wherein the baking oven is provided with an input opening and an output opening via which the carriers are introducible into and removable from the oven chamber.

13. A baking oven according to any one of the preceding claims, wherein both the ascending and the descending path of the transport system comprise two chain conveyors extending in vertical direction, on which carrying guides are mounted, which carrying guides are arranged for engaging the carriers on a third and an opposite fourth side thereof.

14. A baking oven according to claim 13, wherein each chain conveyor comprises two conveyor chains on which the carrying guides are mounted so as to be simply detachable.

15. A baking oven according to claim 12, wherein a feed conveyor is provided which is arranged for passing a carrier into the oven chamber and for placing the respective carrier in a lowermost carrier position of the ascending path.

16. A baking oven according to claim 15, wherein the feed conveyor extends under the ascending path and the descending path all the way to the output opening, such that a carrier, if desired, is transportable from the input opening direct to the output opening.

17. A baking oven according to any one of the preceding claims, wherein adjacent an upper side of the ascending and the descending path, a transfer provision is provided by means of which a carrier disposed in the uppermost carrier position of the ascending path is movable to the uppermost carrier position of the descending path.

18. A baking oven according to claim 17, wherein the transfer provision comprises a chain extending in horizontal direction, provided with at least one optionally retractable and extendible push finger, wherein between said two uppermost carrier positions, guides are provided over which a carrier is slidable by means of the push finger.

19. A baking oven according to claim 13, wherein the chain conveyors of both the ascending and the descending path are driven by a single driving motor.

20. A baking oven provided with a heat exchanger provided with primary and secondary channels, wherein the primary channels are connected to at least one burner, wherein an outlet of the primary channels is connectible to a flue, wherein an inlet of the secondary channels is in fluid communication, via a pipe system, with the suction openings, wherein an outlet of the secondary channels is in fluid communication, via a pipe system, with the blow openings.

21. A baking oven according to claim 20, wherein at least one compressor is provided for pumping around air through the secondary channels via the blow openings, the oven chamber and the suction openings.

22. A baking oven according to any one of the preceding claims, wherein a steam generator is provided which is arranged for introducing steam into the oven chamber.

23. A baking oven according to any one of the preceding claims, wherein the baking oven is provided with means for placing baking products onto the carriers adjacent an oven chamber inlet and with means for taking off baking products from the carriers adjacent an oven chamber outlet, wherein the transport system is provided with return transport means to transport the carrier from the lowermost carrier position of the descending path to the lowermost position of the ascending path, said return transport means extending in the oven chamber.

24. A baking oven according to claim 23, wherein along a return transport path, additional heating means are arranged for heating the at least one carrier situated in the return transport path.

25. A baking oven according to claim 21, wherein the at least one compressor has a variable speed for creating a variable hot air flow rate in the oven chamber.

26. A baking oven according to claim 25, wherein in the oven more than one heating zone is present, with a compressor being provided for each heating zone.

27. A baking oven according to any one of the preceding claims, wherein in the oven more than one heating zone is present.

28. A baking oven according to claim 27, wherein within an ascending and/or descending path more than one heating zone is present.

29. A baking oven according to claim 27 or 28, wherein the movability of the blow and suction openings is controllable independently per zone.

30. A baking oven according to any one of the preceding claims, wherein adjacent a top of the ascending and/or descending path an output opening is provided for removing carriers or baking products from the oven chamber.

31. A baking oven according to any one of the preceding claims, wherein the air flow rate of the hot air flowing from the blow openings is controllable.

32. A baking oven according to claim 20, wherein in the pipe system a suction opening is provided for drawing in fresh air and an exhaust opening for exhausting warm air present in the oven chamber.

33. A baking oven according to any one of the preceding claims, wherein the baking oven is provided with a control which, depending on a bread type and/or bread dimensions introduced therein, sets the position of the blow and suction openings relative to the carrier positions.

34. A baking oven according to any one of the preceding claims, wherein at least the blow openings are provided with slats whose angular position is adjustable for controlling the blow-out direction of the blow openings.

35. A baking oven according to claim 34, wherein the slats above the blow openings are independently adjustable with respect to the slats under the blow openings, so that the size of the blow openings is controllable.

36. A baking oven according to at least claim 1, wherein the heating means for heating air comprise a burner, wherein a flue outlet of the burner is in fluid communication with the blow openings, such that the flue gases are used directly for heating the oven chamber.

37. A baking system provided with a baking oven according to any one of the preceding claims and provided with an external transport system for carriers, wherein carriers of at least two types are included in the transport system.

38. A baking system according to claim 37, wherein in the external transport system buffers are included for at least temporarily storing carriers.
